# EUROPEAN PATENT SPECIFICATION

(11) **EP 2 211 157 B1**
(45) Date of publication and mention of the grant of the patent: **25.07.2018**
(21) Application number: 09001082.8
(22) Date of filing: 27.01.2009
(51) Int. Cl.: G01M 1/32

(54) **Method and wheel balancer for balancing a vehicle wheel**
Verfahren und Radauswuchtmaschine zum Auswuchten eines Fahrzeugrades
Procédé et équilibreuse de roue pour équilibrer une roue de véhicule

(43) Date of publication of application: 28.07.2010
(73) Proprietor: Snap-on Equipment Srl a unico socio, 42015 Correggio (RE) (IT)
(72) Inventor: Braghiroli, Francesco, 42122 Reggio Emilia (IT)
(74) Representative: Eisenführ Speiser

(56) References cited:
- US-A1- 2005 274 179
- US-A1- 2008 060 425

## Description

The invention concerns a method and a wheel balancer for balancing a vehicle wheel. Imbalance in the general case is a combination of static and dynamic (couple) imbalance. It is known to use at least two correction weights which are separated axially in correction planes on the wheel surface, particularly on the rim of the wheel to compensate the combination of static and dynamic imbalance within predetermined thresholds. To facilitate the operation work, two features are available in wheel balancer: the blind or suppression threshold and the rounding capability. The suppression (blind) threshold determines the amount of imbalance which can be neglected or the amount of the acceptable residual imbalance. The value of the suppression threshold is user - programmable and can be set within the range of 3,5 - 20 grams dependent from the desired degree of accuracy and from the vehicle type. The rounding capability rounds the measured imbalance for each correction plane to match commercially available sizes of correction weights.

U. S. Patent 5,915,274 discloses a method for electronically determining at least one axial location for a correction weight from the scanned wheel profile and the measured imbalance data of the vehicle wheel to reduce the required number of correction planes to one when possible. In the known method, the balancer computer uses variable correction plane locations to present the best weight arrangement.

US patent application 2005/0274179 discloses a method and an apparatus for determining imbalance correction weights for rotating bodies. A balancer includes a spindle which is driven by a motor, an optical shaft encoder and imbalance force sensors. For determining imbalance correction weights, the imbalances of a rotating body are measured and the amount of an imbalance correction weight is calculated such that it is sufficient to reduce the imbalance of the rotating body to be within a tolerance of a residual imbalance level.

An object of the invention is to provide another method and another wheel balancer for balancing a wheel with a reduced amount of correction weight.

The object is solved by the features of claim 1. The subclaims disclose advantageous modifications of the invention.

The invention provides a method for balancing a vehicle wheel comprising the following steps. After the vehicle wheel has been mounted on a measurement shaft of the wheel balancer, axial locations along the wheel axis for correction planes within which a correction weight is to be placed on the wheel surface are determined dependent from the type of the vehicle wheel. Preferably, two or three axial locations for the correction planes can be determined. Two correction planes are located with axial distances on both sides of a central wheel plane. Further, dependent from the vehicle type (passenger car, motorcycle, light truck, heavy truck) suppression thresholds for acceptable residual static and dynamic (couple) imbalances are predetermined. After having conducted the measuring run for obtaining the imbalance data of the vehicle wheel, an electronical calculation system of the wheel balancer calculates a respective mass and a rotational angular position of a single correction weight in each of the predetermined axial locations of the correction planes on the associated radius of the wheel surface, particularly of the rim surface. Further, the electronical calculation system simulates the placement of the calculated mass in different rotational angular position including the calculated rotational angular
position in each of the predetermined correction planes and compares the predetermined static and dynamic residual imbalances achieved during the simulated placement of a calculated single correction weight in the respective correction plane. If the result of the simulation shows that the residual imbalances which are achieved at least in one of the predetermined correction planes are within the predetermined thresholds, the single correction weight is placed in that correction plane on the wheel surface in the therefore calculated or simulated rotational angular position. If the residual imbalances are within the thresholds in each of
the predetermined correction planes, that correction weight is placed in the associated correction plane for which the residual imbalances are the smallest.

Preferably, the single weight is placed, on one of the both sides of the central wheel plane, in that predetermined correction plane in which the measured imbalance is the highest. If the measured imbalance is higher in the correction plane on the left side of the central wheel plane, then the single weight is placed in said correction plane. If the measured imbalance is higher in the correction plane on the right side of the central wheel plane, the correction weight is placed in said correction plane.

During the simulation, the respectively calculated single weight is applied in each predetermined correction plane in different rotational angular positions in order to reach residual imbalances (static and dynamic) which are within the predetermined thresholds. In the event that at least one of the residual imbalances is beyond the predetermined threshold, the correction masses and angular positions of at least two correction weights to be placed in the two predetermined correction planes on the wheel surface are calculated according to the standard method in known manner.

The amount of the acceptable dynamic residual imbalance (dynamic threshold) has a double value of the amount of the acceptable static residual imbalance (static threshold), for example the acceptable dynamic residual imbalance is 5 grams and the acceptable static residual imbalance is 10 grams.

A further explanation of the invention will be given by the description of the Figures.

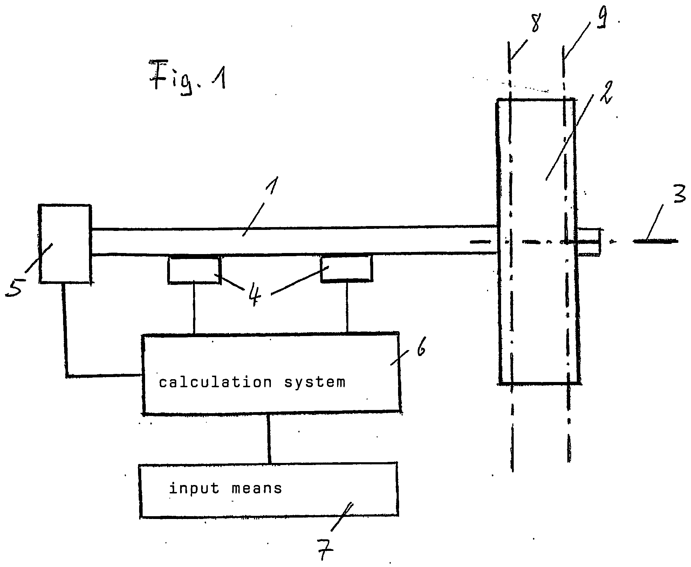

Figure 1 shows schematically features of a wheel balancer which is an embodiment of the invention.
Figure 2 shows schematically the profile of a wheel rim onto which correction weights can be placed in predetermined correction planes.

The shown embodiment includes a measurement shaft 1 on which a vehicle wheel 2 is mounted in known manner. In operative connection with the measurement shaft 1 are transducers of a measurement system 4 to obtain imbalance data resulting from an imbalance of the vehicle wheel 2. The transducers are configured to produce signals which are proportional to forces created by the wheel imbalance. The transducer signals are delivered to a calculation system 6 which may be the computing system of the wheel balancer or may be implemented into the computer system of the wheel balancer. The calculation system 6 is connected to a rotational angle determining system 5 and to input means 7.

The rotational angle determining system 5 provides a signal which is proportional to the rotational angle of the vehicle wheel 2 or of the measurement shaft 1 around a wheel axis 3 which can be coaxial with the shaft axis. The rotational angle determining system 5 can include a device which delivers a signal proportional to incremental rotational angles or another signal which is proportional to the rotational angles of the wheel starting from a zero point, for example a sinusoidal signal or a counting signal. The rotational angle determining system 5 may be implemented into the calculation system 6.

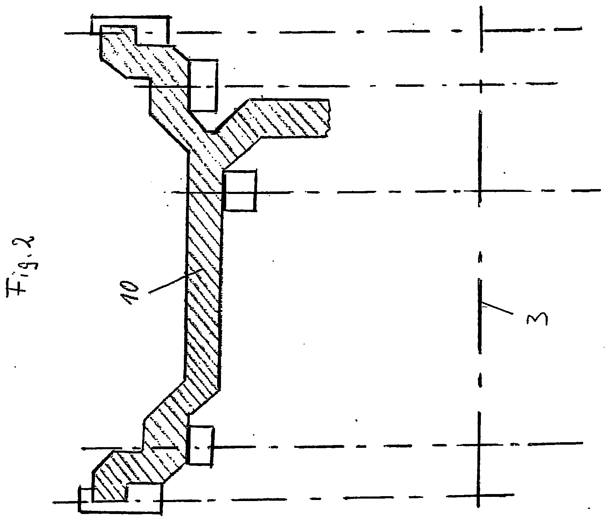

The imput means 7 are configured to predetermine along the wheel axis 3 or shaft axis at least two axial locations of correction planes 8 and 9 within which at least one correction weight is to be placed for balancing the vehicle wheel 2. Fig. 2 shows several axial locations of correction planes which can be chosen on the surface of a rim 10 of the vehicle wheel 2. Further, the input means 7 are configured to predetermine dependent from the vehicle type thresholds for acceptable residual static and dynamic imbalances. The location data for the correction planes 8 and 9 may be input manually by the service person or may be input automatically by scanning the profile of the rim surface onto which the correction weights or the single correction weight should be placed. The values of the thresholds may be input manually.

The calculation system 6 is configured to calculate, using the imbalance data received from the measurement system 4, in each predetermined correction plane 8,9 the mass of a correction weight which compensates the imbalance acting in the respective predetermined correction plane 8 or 9 on the associated radius. As shown in Figure 2, the inner and the outer rim edges or inner and outer rim surfaces facing the wheel axis 3 may be used as locations for the placement of the correction weights on the rim 10. As described above, at least two axial locations of respective correction planes 8,9 within which the single correction weight or more correction weights should be placed are predetermined. As shown in Figure 2, dependent from the chosen correction planes, the radial locations of the weights may have the same radius or different radii.

The calculation system 6 is further designed to simulate the placement of each calculated mass in different rotational angular positions within the respective correction plane on the associated radius to find out the rotational angular position in which the residual static and dynamic imbalances are within the predetermined thresholds. If in one of the predetermined correction planes such a simulated position can be determined, a single correction weight is placed on the corresponding position onto the vehicle wheel, particularly onto the surface of the rim 10. If a simulated position of one of the calculated masses for compensating imbalance within the predetermined thresholds can not be found out during the simulation routine, the standard calculation in which static and dynamic balancing corrections are achieved with at least two correction weights is performed.

The described single weight modus may be a eligible modus of the wheel balancer. Additionally, the wheel balancer can perform the above described standard modus and other modi, for example a " behind the spokes" modus in which a placement of the correction weights behind the spokes is achieved, as disclosed in U.S. Patent 5, 591, 909.

### Feature List

- 1: measurement shaft
- 2: vehicle wheel
- 3: wheel axis
- 4: measurement system
- 5: rotational angle determining system
- 6: calculating system
- 7: input means
- 8: correction plane
- 9: correction plane
- 10: rim of the vehicle wheel

## Claims

1. A method for balancing a vehicle wheel, comprising:
- predetermining, dependent from the type of the vehicle wheel, axial locations along the wheel axis for correction planes within which a correction weight is to be placed on the wheel surface,
- predetermining, dependent from the vehicle type, thresholds for the residual static and dynamic imbalances;
- obtaining imbalance data for the vehicle wheel during a measuring run;
- calculating from the imbalance data the respective mass and angular position of a correction weight in each of the predetermined axial positions on the vehicle wheel;
- comparing each of the predetermined static and dynamic residual imbalances with the static and dynamic residual imbalances achieved when a single correction weight is placed by simulation using a calculation system, when the calculated respective correction mass of said single correction weight is placed by simulation in its respective correction plane in different angular positions including the respective calculated angular position of the correction weight; and
- placing said single correction weight with the calculated mass in the simulated angular position in that correction plane in which the residual imbalances are within the predetermined thresholds.

2. The method according to claim 1, wherein in the event at least one of the residual imbalances achieved during the simulation is beyond the predetermined thresholds, the correction masses and angular positions of at least two correction weights to be fixed in two axial positions are calculated.

3. The method according to claim 1, wherein the single correction weight is placed in that predetermined axial position in which the measured imbalance is highest.

4. The method according to claim 1 or 3, wherein the single correction weight is placed in a correction plane having an axial distance to the central plane of the wheel.

5. The method according to one of the claims 1 to 4, wherein the calculated mass of each corrective weight is placed during the simulation in different rotational angular positions in the associated predetermined correction plane on the respective radius of the wheel surface to find out an rotational angular position at which the residual imbalances are within the predetermined thresholds.

6. A wheel balancer comprising
- a measurement shaft (1) on which a vehicle wheel (2) to be balanced can be mounted,
- a measurement system (4) operatively connected with the measurement shaft (1) to obtain imbalance data resulting from an imbalance of the vehicle wheel (2),
- a rotational angle determining system (5) for determining the rotational angle of the measurement shaft (1) or of the vehicle wheel (2);
- a calculation system (6) to calculate from the imbalance data in each predetermined correction plane the mass and angular position of a correction weight compensating the imbalance acting in the respective correction plane,
- input means (7) to predetermine along the wheel axis (3) the axial location of correction planes (8, 9) within which said correction weight is to be placed for balancing the vehicle wheel (2), and to predetermine, dependent from the vehicle type, thresholds for the residual static and dynamic imbalances,
wherein the calculation system (6) is configured to perform a simulation routine in which the calculated mass of a single correction weight is placed in the respective correction plane (8, 9) in different rotational angular positions including the respective calculated angular position to find out the rotational angular position in which the residual imbalances are within the predetermined thresholds.

7. The wheel balancer of claim 6, wherein a single weight modus performing the simulation routine is an eligible modus of the calculation system (6).

## Patentansprüche

1. Verfahren zum Auswuchten eines Fahrzeugrades, umfassend:
- Vorherbestimmen axialer Positionen, abhängig vom Typ des Fahrzeugrades, entlang der Radachse für Ausgleichsebenen innerhalb derer ein Ausgleichsgewicht auf der Radoberfläche platziert werden soll,
- Vorherbestimmen von Grenzwerten für die statischen und dynamischen Restunwuchten in Abhängigkeit vom Fahrzeugtyp;
- Ermitteln von Unwuchtdaten für das Fahrzeugrad während eines Messlaufs;
- Berechnen der jeweiligen Masse und Winkellage eines Ausgleichsgewichts in jeder der vorherbestimmten axialen Positionen am Fahrzeugrad anhand der Unwuchtdaten;
- Vergleichen jeder der vorherbestimmten statischen und dynamischen Restunwuchten mit den statischen und dynamischen Restunwuchten, die erreicht werden, wenn ein einzelnes Ausgleichsgewicht durch Simulation unter Verwendung eines Berechnungssystems platziert wird, wenn die berechnete jeweilige Ausgleichsmasse des einzelnen Ausgleichsgewichts durch Simulation in seiner jeweiligen Ausgleichsebene in verschiedenen Winkelpositionen einschließlich der jeweils berechneten Winkelposition des Ausgleichsgewichts platziert wird; und
- Platzieren des einzelnen Ausgleichsgewichts, mit der berechneten Masse in der simulierten Winkelposition, in der Ausgleichsebene, in der sich die Restunwuchten innerhalb der vorherbestimmten Grenzwerte befinden.

2. Verfahren nach Anspruch 1, wobei für den Fall, dass mindestens eine der während der Simulation erzielten Restunwuchten über den vorherbestimmten Grenzwerten liegt, die Ausgleichsmassen und Winkelpositionen von mindestens zwei in zwei axialen Positionen zu fixierenden Ausgleichsgewichten berechnet werden.

3. Verfahren nach Anspruch 1, wobei das einzelne Ausgleichsgewicht in die vorherbestimmte axiale Position platziert wird, in der die gemessene Unwucht am größten ist.

4. Verfahren nach Anspruch 1 oder 3, wobei das einzelne Ausgleichsgewicht in einer Ausgleichsebene mit einem axialen Abstand zur Mittelebene des Rades platziert wird.

5. Verfahren nach einem der Ansprüche 1 bis 4, wobei die berechnete Masse jedes Ausgleichsgewichts während der Simulation in verschiedenen Drehwinkelpositionen in der zugehörigen vorherbestimmten Ausgleichsebene auf dem jeweiligen Radius der Radoberfläche platziert wird, um eine Drehwinkelposition zu ermitteln, bei der die Restunwuchten innerhalb der vorherbestimmten Grenzwerte liegen.

6. Radauswuchtmaschine enthaltend:
- eine Messwelle (1), auf der ein auszuwuchtendes Fahrzeugrad (2) montiert werden kann,
- ein Messsystem (4), das wirksam mit der Messwelle (1) verbunden ist, um Unwuchtdaten zu erhalten, die sich aus einer Unwucht des Fahrzeugrades (2) ergeben,
- ein Drehwinkelbestimmungssystem (5) zur Bestimmung des Drehwinkels der Messwelle (1) oder des Fahrzeugrades (2);
- ein Berechnungssystem (6), um aus den Unwuchtdaten in jeder vorherbestimmten Ausgleichsebene die Masse und die Winkellage eines Ausgleichsgewichts zu berechnen, das die in der jeweiligen Ausgleichebene wirkende Unwucht kompensiert,
- Eingabemittel (7), um entlang der Radachse (3) die axiale Position der Ausgleichsebenen (8, 9), innerhalb derer das Ausgleichsgewicht zum Auswuchten des Fahrzeugrades (2) zu platzieren ist, vorherzubestimmen, und um in Abhängigkeit vom Fahrzeugtyp Grenzwerte für die statischen und dynamischen Restunwuchten vorherzubestimmen,
wobei das Berechnungssystem (6) konfiguriert ist, eine Simulationsroutine durchzuführen, bei der die berechnete Masse eines einzelnen Ausgleichsgewichts in der jeweiligen Ausgleichsebene (8, 9) in verschiedenen Drehwinkelpositionen einschließlich der jeweiligen berechneten Drehwinkelposition platziert wird, um die Drehwinkelposition zu ermitteln, in der die Restunwuchten innerhalb den vorherbestimmen Grenzwerten liegen.

7. Radauswuchtmaschine nach Anspruch 6, wobei ein Einzelgewichtsmodus, der die Simulationsroutine durchführt, ein wählbarer Modus des Berechnungssystems (6) ist.

## Revendications

1. Procédé d'équilibrage d'une roue de véhicule, comprenant:
- prédéterminer, en fonction du type de la roue de véhicule, des emplacements axiaux le long de l'axe de roue pour des plans de correction à l'intérieur desquels un poids de correction doit être placé sur la surface de roue,
- prédéterminer, en fonction du type de véhicule, des seuils pour les déséquilibres statiques et dynamiques résiduels;
- obtenir des données de déséquilibre pour la roue de véhicule pendant un cycle de mesure;
- calculer à partir des données de déséquilibre la masse et la position angulaire respective d'un poids de correction dans chacune des positions axiales prédéterminées sur la roue de véhicule;
- comparer chacun des déséquilibres résiduels statiques et dynamiques prédéterminés aux déséquilibres résiduels statiques et dynamiques atteints lorsqu'un poids de correction unique est placé par simulation à l'aide d'un système de calcul, lorsque la masse de correction respective calculée dudit poids de correction unique est placée par simulation dans son plan de correction respectif dans différentes positions angulaires comprenant la position angulaire calculée respective du poids de correction; et
- placer ledit poids de correction unique avec la masse calculée dans la position angulaire simulée dans ce plan de correction dans lequel les déséquilibres résiduels se trouvent à l'intérieur des seuils prédéterminés.

2. Procédé selon la revendication 1, dans lequel, dans le cas où au moins l'un des déséquilibres résiduels atteints pendant la simulation est au-delà des seuils prédéterminés, les masses de correction et les positions angulaires d'au moins deux poids de correction à fixer dans deux positions axiales sont calculées.

3. Procédé selon la revendication 1, dans lequel le poids de correction unique est placé dans cette position axiale prédéterminée dans laquelle le déséquilibre mesuré est le plus élevé.

4. Procédé selon la revendication 1 ou 3, dans lequel le poids de correction unique est placé dans un plan de correction ayant une distance axiale par rapport au plan central de la roue.

5. Procédé selon l'une des revendications 1 à 4, dans lequel la masse calculée de chaque poids de correction est placée pendant la simulation dans différentes positions angulaires de rotation dans le plan de correction prédéterminé associé sur le rayon respectif de la surface de roue pour trouver une position angulaire de rotation à laquelle les déséquilibres résiduels se trouvent à l'intérieur des seuils prédéterminés.

6. Dispositif d'équilibrage de roue comprenant
- un arbre de mesure (1) sur lequel une roue de véhicule (2) à équilibrer peut être montée,
- un système de mesure (4) relié fonctionnellement à l'arbre de mesure (1) pour obtenir des données de déséquilibre résultant d'un déséquilibre de la roue de véhicule (2),
- un système de détermination d'angle de rotation (5) pour déterminer l'angle de rotation de l'arbre de mesure (1) ou de la roue de véhicule (2);
- un système de calcul (6) pour calculer à partir des données de déséquilibre dans chaque plan de correction prédéterminé la masse et position angulaire d'un poids de correction compensant le déséquilibre agissant dans le plan de correction respectif,
- des moyens d'entrée (7) pour prédéterminer le long de l'axe de roue (3) l'emplacement axial de plans de correction (8, 9) à l'intérieur duquel ledit poids de correction doit être placé pour équilibrer la roue de véhicule (2), et pour déterminer, en fonction du type de véhicule, des seuils pour les déséquilibres statiques et dynamiques résiduels,
dans lequel le système de calcul (6) est configuré pour effectuer une routine de simulation dans laquelle la masse calculée d'un poids de correction unique est placée dans le plan de correction respectif (8, 9) dans différentes positions angulaires de rotation comprenant la position angulaire calculée respective pour trouver la position angulaire de rotation dans laquelle les déséquilibres résiduels se trouvent à l'intérieur des seuils prédéterminés.

7. Dispositif d'équilibrage de roue selon la revendication 6, dans lequel un mode de poids unique exécutant la routine de simulation est un mode éligible du système de calcul (6).
